# EUROPEAN PATENT APPLICATION

(11) **EP 4 556 696 A1**
(43) Date of publication of application: **21.05.2025**
(21) Application number: 24206322.0
(22) Date of filing: 14.10.2024
(51) Int. Cl.: F02C 3/22, F02C 6/08, F02C 7/224

(54) **PROPULSION SYSTEM COMPRISING A HYDROGEN-BURNING GAS TURBINE ENGINE**

(30) Priority: 14.11.2023 GB 202317415
(71) Applicant: Rolls-Royce plc, London N1 9FX (GB)
(72) Inventor: Willmot, Michael C, Derby, DE24 8BJ (GB); Dimitrova, Gergana Yanakieva, Derby, DE24 8BJ (GB)
(74) Representative: Rolls-Royce plc

(57) **Abstract**

A propulsion system 100 comprises a propulsive hydrogen-burning gas turbine engine 190A, a fuel cell stack auxiliary power unit (APU) 142 and a first tank 106 arranged to store liquid hydrogen with an ullage 105. A first fuel line 108 includes a first pump 107 and a first vaporiser 116 and transports hydrogen from the first tank to combustion apparatus 194A of the engine during operation of the propulsion system. A second fuel line 109 includes a second fuel pump 181 and a second vaporiser 185 and transports hydrogen from the first tank to the fuel cell stack APU. A duct 111 connects the second fuel line at a position thereon between the second vaporiser and the fuel cell stack to the ullage of the first tank, providing for pressure in the first tank to be maintained therein as liquid hydrogen within the first tank is depleted, thus avoiding cavitation of liquid hydrogen within the first fuel pump.

## Description

### TECHNICAL FIELD

The invention relates to a propulsion system comprising a hydrogen-burning gas turbine engine and to an aircraft comprising the propulsion system.

### BACKGROUND

In order to reduce or eliminate emissions of carbon dioxide, use of hydrogen as an alternative to hydrocarbon fuel in gas turbine engines has been proposed, although historically this has only been practical in land-based installations. More recently there has been interest in aircraft having propulsion systems comprising hydrogen-burning gas turbine engines fuelled by hydrogen initially stored at cryogenic temperatures, as either a compressed gas, a supercritical fluid, or a liquid. Such fuel requires heating prior to delivery to an engine, both to permit combustion and to prevent icing. However, pumping hydrogen within such systems, particularly where the hydrogen is stored as a liquid, presents technical challenges. These challenges include the high power required to pump the hydrogen at the necessary flow rates and pressures, and the risk of cavitation within a fuel pump where the pump operates on liquid hydrogen.

### BRIEF SUMMARY

A first aspect of the invention provides a propulsion system comprising:
(i) a propulsive hydrogen-burning gas turbine engine;
(ii) a hydrogen-fuelled auxiliary power unit;
(iii) a first tank arranged to store liquid hydrogen with an ullage;
(iv) a first fuel line arranged to transport hydrogen from the first tank to combustion apparatus of the gas turbine engine, the first fuel line including a first fuel pump and a first vaporiser; and
(v) a second fuel line arranged to transport hydrogen from the first tank to the auxiliary power unit, the second fuel line including a second fuel pump and a second vaporiser;
wherein the first and second fuel pumps are arranged to provide liquid hydrogen from the first tank to the first and second vaporisers respectively and the first and second vaporisers are arranged to receive and vaporise liquid hydrogen from the first and second fuel pumps respectively and provide resulting gaseous hydrogen to the combustion apparatus and to the auxiliary power unit respectively, and wherein the propulsion system further comprises a duct connecting the second fuel line at a position thereon between the second vaporiser and the auxiliary power unit to the ullage of the first tank. As liquid hydrogen stored within the first tank is depleted during operation of the propulsion system, pressure within the first tank is maintained by gaseous hydrogen provided to the ullage of the first tank via the duct, thus avoiding cavitation of liquid hydrogen within the first and second fuel pumps.

At least one of the first and second fuel pumps may be an electric fuel pump, the auxiliary power unit being arranged to provide electrical power to the at least one electric fuel pump.

The gas turbine engine may comprise an electric starter-motor, the auxiliary power unit being arranged to provide electrical power to the electric starter-motor.

The second vaporiser may comprise an electric heater, the auxiliary power unit being arranged to provide electrical power to the electric heater.

In order to thermally insulate parts of the propulsion system storing or conveying liquid hydrogen, preferably the first tank and respective portions of the first and second fuel lines extending between the first tank and the first and second vaporisers respectively are contained within a first volume which is arranged for evacuation during operation of the propulsion system. The propulsion system may comprise a vacuum pump arranged to receive electrical power from the auxiliary power unit and substantially evacuate the first volume.

In order to avoid formation of explosive mixtures of air and gaseous hydrogen in the vicinity of either or both of the first and second vaporisers, preferably the propulsion system comprises apparatus arranged to maintain an inert atmosphere within a second volume which includes at least one of a portion of the first fuel line including the first vaporiser and a portion of the second fuel line including the second vaporiser. The apparatus may comprise a nitrogen storage tank arranged to store compressed gaseous nitrogen and a duct coupling the second tank to the second volume.

To facilitate engine start-up in cases where the first vaporiser utilises heat from the propulsive hydrogen-burning gas turbine engine, and also to allow power-boosting, the propulsion system preferably comprises a second tank arranged to store compressed gaseous hydrogen and a third fuel line arranged to convey gaseous hydrogen between the second tank and the first fuel line at a position thereon between the first vaporiser and the combustion apparatus. During normal operation of the propulsion system gaseous hydrogen may be provided to the second tank from the first fuel line in order to replace gaseous hydrogen in the second tank which is consumed during start-up or when temporarily boosting the power output of the propulsion system. The system may comprise a fourth fuel line arranged to convey gaseous hydrogen from the second tank to the auxiliary power unit in order to facilitate start-up of the auxiliary power unit. Whether or not a fourth fuel line is present, the system preferably comprises a nitrogen storage tank and apparatus arranged to selectively convey nitrogen from the nitrogen storage tank and gaseous hydrogen from the second tank to at least one of (i) a position on the first fuel line between the first fuel pump and the first vaporiser and (ii) a position on the second fuel line between the second fuel pump and the second vaporiser. This arrangement provides a purging and priming system allowing the propulsion system to be safely started up and shut down.

The first vaporiser may comprise a heat exchanger arranged to receive compressor bleed air from the hydrogen-burning gas turbine engine and transmit heat from the compressor bleed air to liquid hydrogen within the first fuel line. Alternatively, the heat-exchanger may be arranged to transmit heat from oil within an oil system of the gas turbine engine, or heat from the exhaust flow of the gas turbine engine, to liquid hydrogen within the first fuel line.

The auxiliary power unit may comprise a hydrogen-fuelled fuel cell stack, for example a PEM fuel cell stack, having at least one fuel cell. The auxiliary power unit may alternatively comprise an auxiliary hydrogen-burning gas turbine engine and an electrical generator arranged to be driven by the auxiliary hydrogen-burning gas turbine engine.

A second aspect of the invention provides an aircraft comprising a propulsion system according to the first aspect. The aircraft may be an aeroplane or a helicopter for example.

### BRIEF DESCRIPTION OF THE DRAWINGS

Embodiments of the invention are described below by way of example only and with reference to the accompanying drawings in which:
- Figure 1: shows an aircraft of the invention; and
- Figure 2: shows a propulsion system of the invention comprised in the aircraft of Figure 1.

### DETAILED DESCRIPTION

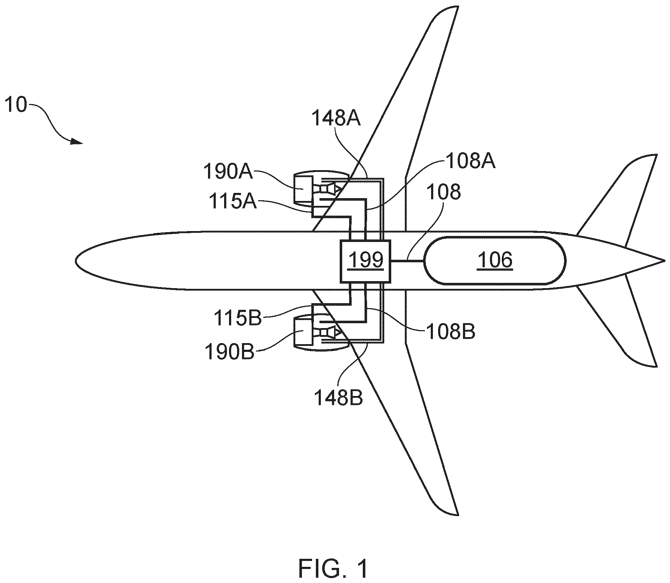

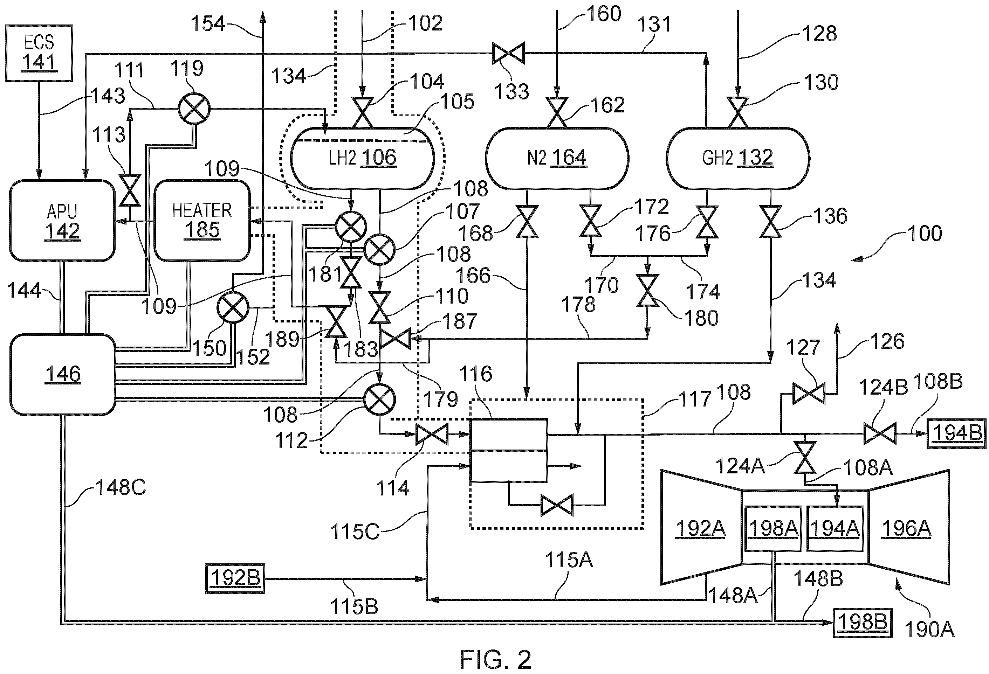

Referring to Figures 1 and 2, an aircraft 10 includes a propulsion system 100 comprising first and second propulsive hydrogen-burning gas turbine engines 190A, 190B each mounted under a respective wing of the aircraft 10. The propulsion system 100 further comprises a first tank 106 storing liquid hydrogen, a first fuel line 108 arranged to transport hydrogen fuel from the first tank 106 via a balance-of-plant 199 of the propulsion system 100 and terminal portions 108A, 108B of the first fuel line 108 to the hydrogen-burning gas turbine engines 190A, 190B. The balance-of-plant 199 in Figure 1 corresponds to all parts of the system 100 shown in Figure 2 other than those shown explicitly in Figure 1. The first engine 190A comprises compressor and turbine sections 192A, 196A, combustion apparatus 194A and an electric starter-motor 198A (which may also function as a generator). Similarly the second engine 190B comprises a compressor section 192B, a turbine section (not shown), combustion apparatus 194B and an electric starter-motor 198B (which may also function as a generator).

Liquid hydrogen is stored within the first tank 106 with an ullage 105. The first tank 106 has an associated input duct 102 incorporating a valve 104 via which the first tank 106 may be filled with liquid hydrogen. The first fuel line 108 of the propulsion system 100 includes low- and high-pressure electric fuel pumps 107, 112, a vaporiser 116, a vent duct 126 and valves 110, 114, 124A, 124B, 127. In operation of the propulsion system 100, liquid hydrogen drawn from the first tank 106 is pumped to the vaporiser 116 where it is vaporised and the resulting gaseous hydrogen passed to combustion apparatus 194A, 194B of the hydrogen-burning gas turbine engines 190A, 190B. The vaporiser 116 is a heat-exchanger which receives bleed air from the compressor sections 192A, 192B of the engines 190A, 190B via ducts 115A, 115B, 115C and transmits heat from the bleed air to liquid hydrogen within the fuel line 108 in order to vaporise the liquid hydrogen. Flow of liquid hydrogen to the vaporiser 116 is regulated by the valve 114. In variants of the propulsion system 100, the vaporiser 116 may be substituted by a fuel-oil heat-exchanger, i.e. a heat-exchanger arranged to transmit heat from oil within an oil system of one or both engines 190A, 190B to liquid hydrogen within the first fuel line 108, or an exhaust recuperator heat-exchanger arranged to transmit heat from the exhaust flow of one or both engines 190A, 190B to liquid hydrogen within the first fuel line 108.

The propulsion system 100 further comprises an auxiliary power unit (APU) 142, the APU 142 being a hydrogen-fuelled fuel cell stack 142, such as a proton-exchange (or polymer electrolyte) membrane (PEM) fuel cell stack for example, comprising one or more individual PEM fuel cells. A second fuel line 109 conveys liquid hydrogen from the first tank 106 via a low-pressure electric fuel pump 181 and a valve 183 to an electric heater 185 which vaporises the liquid hydrogen and provides resulting gaseous hydrogen to the fuel cell stack 142. A duct 111 including a valve 113 and an electric pump 119 connects the second fuel line 109 at point thereon between the electric heater 185 and the fuel cell stack 142 to the ullage 105 of the first tank 106. A portion of the gaseous hydrogen generated by the electric heater 185 is provided to the first tank 106 via the duct 111 in order to maintain pressure in the first tank 106 as the liquid hydrogen contained therein is depleted during operation of the propulsion system 100. By maintaining pressure within the first tank 106, cavitation of liquid hydrogen within the low- and high-pressure fuel pumps 107, 181, 112 is avoided. Air is input to the fuel cell stack 142 from an environmental control system (ECS) 141 of the aircraft 10, the ECS 141 providing conditioned air to a passenger space within the fuselage of the aircraft 10. Electrical power output by the fuel cell stack 142 is provided to a power distribution system 146 which distributes electrical power to the fuel pumps 107, 112, 181, the pump 119 comprised in the duct 111 and the starter-motors 198A, 198B of engines 190A, 190B. Other aircraft systems requiring electrical power may also be powered from the power distribution system 146.

Engines 190A, 190B generate sufficient heat to vaporise liquid hydrogen within the fuel line 108 only after being operational for a certain warm-up period after start-up. A second tank 132 storing pressurised gaseous hydrogen at several hundred bar (e.g. 100 bar or more) is therefore provided, the second tank 132 being coupled by a third fuel line 134, which includes a valve 136, to the first fuel line 108 at a position thereon intermediate the vaporiser 116 and the combustion apparatus 194A, 194B. Gaseous hydrogen from the second tank 132 is used to start the engines 190A, 190B (in conjunction with starter-motors 198A, 198B) and may also allow the engines 190A, 190B to operate at higher power for limited periods during power-intensive operations such as take-off and climbing. During normal operation of the propulsion system 100, a portion of the flow of gaseous hydrogen generated by the vaporiser 116 may be stored in the tank 132 thus replacing gaseous hydrogen withdrawn from the second tank 132 on start-up or during high-power operation of the propulsion system 100. In order to facilitate start-up of the fuel cell stack 142, a fourth fuel line 131 couples gaseous hydrogen from the second tank 132 to the fuel cell stack 142. The fourth fuel line 131 includes a valve 133. Flows of gaseous hydrogen from the second tank 132 to the first fuel line 108 via the third fuel line 134, and from the second tank 132 to the fuel cell stack 142 via the fourth fuel line 131, are regulated by valves 136, 133 respectively. The second tank 132 may be filled via an associated input duct 128 comprising a valve 130.

The first tank 106, the input duct 102, the valve 104 and a portion of the first fuel line 108 extending between the first tank 106 and the vaporiser 116 are contained within a first volume 134 which is substantially evacuated in operation of the propulsion system 100 by an electric vacuum pump 150 which is powered from the power distribution system 146. Air withdrawn from the first volume 134 via a duct 152 is expelled via a duct 154. A portion of the second fuel line 109 from the first tank 106 to the electric heater 185 is also included within the volume 134. The (evacuated) first volume 134 provides thermal insulation for those parts of the first and second fuel lines 108, 109 which convey liquid hydrogen in operation of the propulsion system 100.

The propulsion system 100 further comprises a nitrogen storage tank 164 storing pressurised gaseous nitrogen, the nitrogen storage tank 164 being connected to a second volume 117 surrounding the vaporiser 116 by a duct 166 including a valve 168, thus allowing an inert atmosphere of nitrogen to be provided around the vaporiser 116 to prevent formation of an explosive mixture of air and gaseous hydrogen in the vicinity of the vaporiser 116 during operation of the propulsion system 100. The nitrogen storage tank 164 has an associated input duct 160 including a valve 162 which allow the third tank 164 to be filled. In variants of the propulsion system 100, the second volume 117 includes the second vaporiser 185, or both the first and second vaporisers 116, 185.

Ducts 170, 174, 178, 179 and associated valves 172, 176, 180, 187, 189 allow for gaseous hydrogen from the second tank 132 and gaseous nitrogen from the third tank 164 to be selectively introduced into the first fuel line 108 at a position thereon between the low- and high-power fuel pumps 107, 112, and into the second fuel line 109 at a position thereon between the low-power electric fuel pump 181 and the electric heater 185. These ducts and valves, together with the second tank 132 and the nitrogen storage tank 164 form a purge/prime arrangement for ensuring safe operation of the propulsion system 100. On start-up, nitrogen from the nitrogen storage tank 164 is introduced into the first fuel line 108 at valve 187 in order to displace air from the first fuel line 108. Gaseous hydrogen from the second tank 132 is then introduced into the first fuel line 108 to displace the nitrogen and prime the first fuel line 108. On shut-down of the propulsion system 100, gaseous hydrogen from the second tank 132 is introduced into the first fuel line 108 in order to displace liquid hydrogen between the valve 110 and the vaporiser 116 and move it into the vaporiser 116. Subsequently, nitrogen is introduced into the first fuel line 108 at the valve 110 in order to purge gaseous hydrogen within the fuel line 108 between the valve 110 and the combustion apparatus 194A, 194B of the engines 190A, 190B. Similarly, on-start-up, air is purged from the second fuel line 109 by nitrogen introduced at the valve 189. Gaseous hydrogen is then used to prime the second fuel line 109. On shut-down, gaseous hydrogen from the second tank 132 is used to drive liquid hydrogen into the electric heater unit 185 and subsequently gaseous nitrogen from the nitrogen storage tank 164 is used to purge gaseous hydrogen from the second fuel line 109.

The first tank 106 may be a single individual tank or a tank storage system comprising multiple tanks in which a volume of liquid hydrogen is stored with an ullage. Similarly the second and third tanks 132, 164 may each be a single tank or a tank storage system comprising multiple tanks. For the purposes of this specification, "tank" therefore has a broad meaning including a single tank and also a tank system having more than one tank.

In a variant of the system 100, the APU 142 is an auxiliary hydrogen-burning gas turbine engine arranged to drive an electrical generator which provides electrical power to the power distribution system 146 and the duct 143 is dispensed with.

A second example propulsion system of the invention is similar to the propulsion system 100 of Figure 2 but has a single propulsive hydrogen-burning gas turbine engine. The second example system may be comprised in a fixed-wing aircraft with the propulsive hydrogen-burning gas turbine engine mounted on the fuselage of the aircraft.

A third example propulsion system of the invention, suitable for a helicopter, is similar to the propulsion system 100 of Figure 2 but has a single hydrogen-burning gas turbine engine comprising a free-power turbine arranged to provide mechanical power to a rotor blade system.

## Claims

1. A propulsion system (100) comprising:
(i) a propulsive hydrogen-burning gas turbine engine (190A);
(ii) a hydrogen-fuelled auxiliary power unit (142);
(iii) a first tank (106) arranged to store liquid hydrogen with an ullage (105);
(iv) a first fuel line (108) arranged to transport hydrogen from the first tank to combustion apparatus (194A) of the gas turbine engine, the first fuel line including a first fuel pump (107) and a first vaporiser (116); and
(v) a second fuel line (109) arranged to transport hydrogen from the first tank to the auxiliary power unit, the second fuel line including a second fuel pump (181) and a second vaporiser (185);
wherein the first and second fuel pumps are arranged to provide liquid hydrogen from the first tank to the first and second vaporisers respectively and the first and second vaporisers are arranged to receive and vaporise liquid hydrogen from the first and second fuel pumps respectively and provide resulting gaseous hydrogen to the combustion apparatus and to the auxiliary power unit respectively, and wherein the propulsion system further comprises a duct (111) connecting the second fuel line at a position thereon between the second vaporiser and the auxiliary power unit to the ullage of the first tank.

2. A propulsion system according to claim 1 wherein at least one of the first and second fuel pumps is an electric fuel pump and the auxiliary power unit is arranged to provide electrical power to the at least one electric fuel pump.

3. A propulsion system according to claim 1 or claim 2 wherein the gas turbine engine comprises an electric starter-motor (198A) and the auxiliary power unit is arranged to provide electrical power to the electric starter-motor.

4. A propulsion system according to any preceding claim wherein the second vaporiser comprises an electric heater and the auxiliary power unit is arranged to provide electrical power to the electric heater.

5. A propulsion system according to any preceding claim wherein the first tank and respective portions of the first and second fuel lines extending between the first tank and the first and second vaporisers respectively are contained within a first volume (134) which is arranged for evacuation during operation of the propulsion system.

6. A propulsion system according to claim 5 wherein the propulsion system comprises an electric vacuum pump (150) arranged to receive electrical power from the auxiliary power unit and substantially evacuate the first volume.

7. A propulsion system according to any preceding claim further comprising apparatus (164, 166, 168) arranged to maintain an inert atmosphere within a second volume (117) which includes at least one of (a) a portion of the first fuel line including the first vaporiser and (b) a portion of the second fuel line including the second vaporiser.

8. A propulsion system according to claim 7 wherein said apparatus comprises a nitrogen storage tank (164) arranged to store compressed gaseous nitrogen and a duct (166) coupling the nitrogen storage tank to said second volume.

9. A propulsion system according to any preceding claim further comprising a second tank (132) arranged to store compressed gaseous hydrogen and a third fuel line (134) arranged to convey gaseous hydrogen between the second tank and the first fuel line at a position thereon between the first vaporiser and the combustion apparatus.

10. A propulsion system according to claim 9 further comprising a fourth fuel line (131) arranged to convey arranged to convey gaseous hydrogen from the second tank to the auxiliary power unit.

11. A propulsion system according to claim 9 or claim 10 further a nitrogen storage tank (164) arranged to store compressed gaseous nitrogen and apparatus (170, 172, 174, 176, 179, 180, 187, 189) arranged to selectively convey nitrogen from the nitrogen storage tank and gaseous hydrogen from the second tank to at least one of
(i) a position on the first fuel line between the first fuel pump and the first vaporiser; and
(ii) a position on the second fuel line between the second fuel pump and the second vaporiser.

12. A propulsion system according to any preceding claim wherein the first vaporiser comprises a heat-exchanger (116) arranged to receive compressor bleed air from the gas turbine engine and transmit heat from the compressor bleed air to liquid hydrogen within the first fuel line.

13. A propulsion system according to any of claims 1 to 11 wherein the first vaporiser comprises a heat-exchanger arranged to transmit heat from oil within an oil system of the gas turbine engine to liquid hydrogen within the first fuel line.

14. A propulsion system according to any of claims 1 to 11 wherein the first vaporiser comprises a heat-exchanger arranged to transmit heat from the exhaust flow of the gas turbine engine to liquid hydrogen within the first fuel line.

15. A propulsion system according to any preceding claim wherein the auxiliary power unit comprises either
(a) a hydrogen-fuelled fuel cell stack (142) having at least one fuel cell; or
(b) an auxiliary hydrogen-burning gas turbine engine and an electrical generator arranged to be driven by the auxiliary hydrogen-burning gas turbine engine.
